# EUROPEAN PATENT APPLICATION

(11) **EP 4 299 258 A1**
(43) Date of publication of application: **03.01.2024**
(21) Application number: 23179976.8
(22) Date of filing: 19.06.2023
(51) Int. Cl.: B25J 15/00, B25J 9/16, B25J 15/06

(54) **A GRIPPING DEVICE AND APPARATUS FOR HANDLING PRODUCTS**

(30) Priority: 23.06.2022 IT 202200013300; 23.06.2022 IT 202200013303
(71) Applicant: Fameccanica.Data S.p.A., 66020 San Giovanni Teatino (CH) (IT)
(72) Inventor: ACCIAVATTI, Andrea, I-66020 San Giovanni Teatino (Chieti) (IT); CAPRARA, Mario, I-66020 San Giovanni Teatino (Chieti) (IT)
(74) Representative: Marchitelli, Mauro

(57) **Abstract**

A gripping device (22) comprising: a plurality of modules (36) articulated to a central support (30) and carrying a plurality of suction gripping elements (42), a plurality of actuators (54) associated with respective modules (36) and operable independently of each other to vary the position of the respective modules (36), and a drive unit (50) configured to control the actuators (54) according to signals indicative of geometric characteristics of the products (P) to be handled.

## Description

### Field of the invention

The present invention relates to the automatic handling of products.

The invention was developed, in particular, in view of the automatic handling of different products, in particular, for the sorting and/or packaging of products to be distributed through e-commerce channels.

More specifically, the invention relates to a device for gripping products and an apparatus for handling products.

### Technological background

With the ever-increasing diffusion of e-commerce, handling devices capable of gripping and handling very different products in terms of shape, size and weight are becoming more and more in demand.

Automatic handlers of products used in *pick-and-place* applications are generally equipped with gripping devices equipped with suction cups, which grip the products by suction.

The shape of the gripping devices is defined in the design phase on the basis of the shape, size and weight of the products to be handled. Gripping devices generally work well when the variability of the products to be handled is limited.

On the other hand, when the variability in shape, size and weight of the products to be handled is very high, as in the case of products to be distributed by e-commerce channels, it is very difficult to design a single gripping device that can adequately adapt to a vast range of different products.

In particular, some of the limitations of known types of gripping devices are as follows:
- the footprint of the gripping device is defined in the design phase, and is suitable for a limited range of products that must have dimensions and weight consistent with the dimensions of the gripping device;
- the position of the gripping suction cups offers little margin for variability in the position of the gripping points, which is generally limited to the deformability of the suction cup;
- if the three-dimensional profile of the products to be handled is greater than the margin allowed by the deformability of the suction cups, there may be suction cups that do not correctly come into contact with the surface of the products, with consequent loss of suction energy and gripping capacity;
- if the products to be handled have a much smaller footprint than that of the gripping device, there is a risk of double-picking, which occurs when the gripping device also picks up an adjacent or overlapping product together with the product to be handled;
- the limits of commercial gripping devices are amplified when the products to be handled are contained inside bags of flexible material (paper or plastic material), which mask the shape and real dimensions of the objects contained therein;
- in some cases, flexible packaging bags contain objects with a marked three-dimensional profile that are difficult to pick up with standard gripping devices.

To overcome these drawbacks, gripping devices having a variable configuration have already been proposed in the state of the art.

For example, WO 2021/094262 A1 discloses a suction cup gripping device including a central support and two side supports carrying respective suction cups, wherein the two side supports are hinged to the central support and are jointly moved by a pneumatic control device.

US 9821474 B2 discloses a gripping device for a manipulator comprising a plurality of suction cups carried by a flexible plate which may deform elastically to vary the configuration of the gripping device.

Known variable configuration gripping devices are, however, not capable of satisfying the requirements for the automatic handling of products with highly variable shapes, dimensions and weights and with a marked variability of the three-dimensional profile.

### Object and summary of the invention

The object of the present invention is to provide a gripping device that overcomes the problems of the prior art.

According to the present invention, this object is achieved by a gripping device having the characteristics forming the subject of claim 1.

According to another aspect, the invention relates to an apparatus for handling products having the characteristics of claim 10.

The claims form an integral part of the disclosure provided here in relation to the invention.

### Brief description of the drawings

The present invention will now be described in detail with reference to the attached drawings, given purely by way of non-limiting example, wherein:
- Figure 1 is a schematic side view of an apparatus for handling products according to the present invention,
- Figure 2 is a schematic side view of a gripping device according to the present invention indicated by the arrow II in Figure 1 in a rest configuration,
- Figure 3 is a plan view of the gripping device, according to the arrow III of Figure 2,
- Figure 4 is a schematic side view showing the gripping device of Figure 2 in a gripping configuration of a product,
- Figure 5 is a plan view of a second embodiment of a gripping device,
- Figure 6 is a side view of the gripping device of Figure 5 in a rest configuration, and
- Figure 7 is a schematic side view of the gripping device of Figure 5 in a product gripping configuration.

It will be appreciated that the accompanying drawings are schematic and that some components may not be shown to assist in understanding the Figures. It will be appreciated that the various figures may also not be represented on the same scale.

### Detailed description

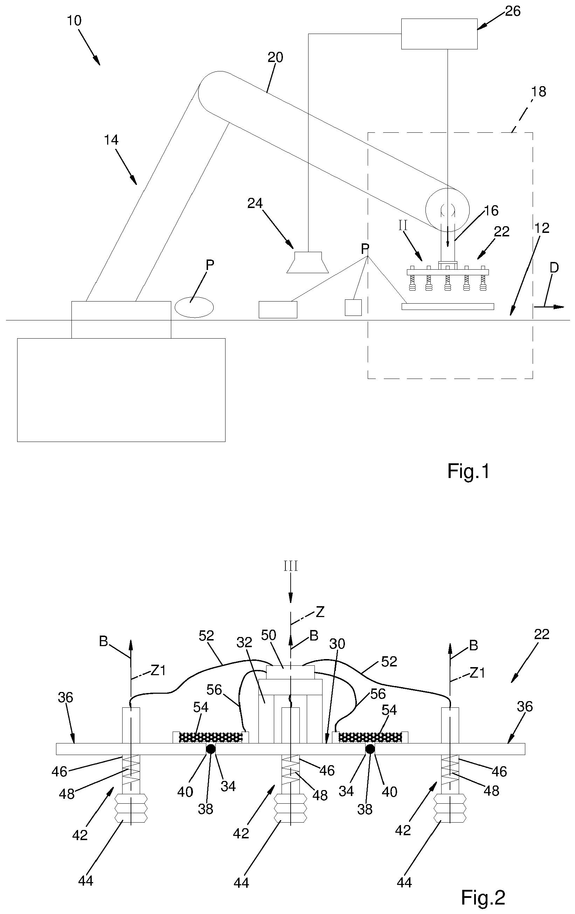

With reference to Figure 1, numeral 10 indicates an apparatus for handling products P. The products P may be arranged on a conveyor 12 that advances the products P in a direction D. The products P may be consumer products intended for distribution by e-commerce channels, and may vary significantly in shape, size and weight. The products P may be handled in sorting or shipping centers, and may be packaged in boxes or flexible bags. The products P may also be devoid of packaging and may be handled in shipping centers during packaging operations.

The apparatus 10 comprises a manipulator 14 having a movable element 16 movable in a workspace 18. The manipulator 14 may be, for example, an anthropomorphic robot having an articulated arm 20. The movable element 16 may be the wrist of the articulated arm 20.

The apparatus 10 comprises a variable configuration gripping device 22 connected to the movable element 16 of the manipulator 14.

The apparatus 10 comprises a vision device 24 arranged to acquire images of the products P to be handled. The vision device 24 may be a vision device suitable for acquiring three-dimensional images of the products P. The vision device may be an industrial video camera, for example, of the type used for quality control, dimensional control, and 3D control of products in production lines.

The apparatus 10 comprises an electronic control unit 26 which receives images of the products P to be handled from the vision device 24. The electronic control unit 26 comprises a processing unit in which an image processing program is installed, configured to extract information from the images that is indicative of geometric characteristics of the products P. In particular, the image processing program may be configured to provide pick-up coordinates of the products, information on the roughness or flatness of the products (three-dimensional profile of the products), shape and dimensions of the products.

The roughness or flatness of the product P provides indications on the three-dimensional profile of the product P to be handled, in particular, on the maximum distance along a direction perpendicular to the gripping direction (vertical direction) between different gripping points of the product P. The dimensional parameters provide indications on the X-Y dimensions of the product P and, therefore, indirectly, also on the weight of the product P to be handled.

The electronic control unit 26, on the basis of the data supplied by the image processing program, generates signals that are used for the configuration of the gripping device 22, so as to adapt the configuration of the gripping device 22 to the product P to be handled each time, in particular, the three-dimensional profile and dimensions of the product P.

With reference to Figures 2-4, the gripping device 22 comprises a central support 30 connected to the movable element 16 of the manipulator 12. The central support 30 may have the shape of a flat plate perpendicular to an axis Z. The central support 30 may be attached to a connection structure 32 provided with means for connection to the movable element 16 of the manipulator 14.

In a possible embodiment, the central support 30 may have a polygonal shape having a plurality of straight sides 34. For example, the central support 30 may have the shape of an equilateral hexagon.

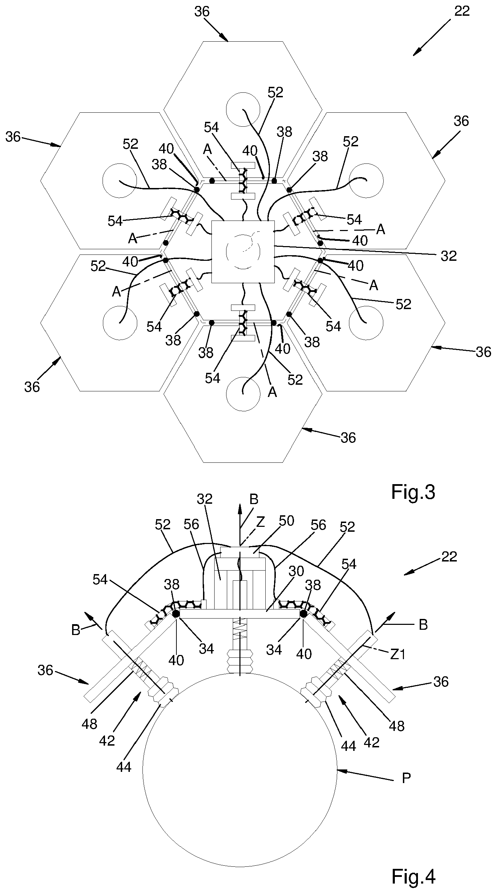

The gripping device 22 comprises a plurality of modules 36 that extend outwards with respect to the central support 30. The modules 36 are articulated to the central support 30 around respective articulation axes A transverse to the axis Z. The modules 36 may be articulated to the central support 30 by hinge elements 38, which may be hinge elements with articulation pins or deformable hinge elements. The modules 36 may have the form of flat plates perpendicular to respective axes Z1. The modules 36 may have a polygonal shape, and may have respective straight sides 40 parallel to respective straight sides 34 of the central support 30. The modules 36 may be articulated to the central support 30 along their respective straight sides 40. With reference to Figure 3, the modules 36 may have a hexagonal shape equal to the hexagonal shape of the central support 30. The number of modules 36 may be equal to the number of sides of the central support 30. The modules 36 may be arranged to form a crown that extends around the central support 30.

The gripping device 22 comprises a plurality of suction gripping elements 42 carried by respective modules 36. At least one suction gripping element 42 may be carried by the central support 30. Each suction gripping element 42 may comprise a suction cup 44 located at the distal end of a tubular member 46. The tubular members 46 may be perpendicular to the modules 36 and to the central support 30, and may extend along respective axes Z1, Z.

In a possible embodiment, the suction gripping elements 42 are movable with respect to the respective modules 36 and to the central support 30 along respective axes Z1, Z in the direction indicated by the arrows B in Figures 2 and 4. The suction gripping elements 42 may be associated with respective elastic elements 48 that tend to keep the suction gripping elements 42 in a predefined position with respect to the modules 36 and with respect to the central support 30. The suction gripping elements 42 are free to move relative to the respective modules 36 and relative to the central support 30 in the respective directions B when subjected to forces acting along the directions B. The movement of the suction gripping elements 42 in the respective directions B compresses or expands the respective elastic elements 48. The elastic elements 48 return the suction gripping elements 42 to their respective predefined positions when the forces acting on the suction gripping elements 42 in the directions B cease.

The suction gripping elements 42 are connected to a drive unit 50 by respective pneumatic lines 52. The drive unit 50 may be provided with solenoid valves suitable for selectively activating/deactivating the suction gripping elements 42 independently of each other. The drive unit 50 may also be configured to selectively modulate the suction vacuum of the suction gripping elements 42 independently of each other.

In an active state, the suction gripping elements 42 are pneumatically connected to a sub-atmospheric pressure source and are capable of gripping the products P by the respective suction cups 44. The gripping force of the suction cups 44 may be individually modulated. In a deactivated state, the connection of the suction gripping elements 42 with the sub-atmospheric pressure source is interrupted.

Again with reference to Figures 2-4, the gripping device 22 comprises a plurality of actuators 54 arranged between the central support 30 and the respective modules 36. The actuators 54 control an oscillation of the respective modules 36 around the respective articulation axes A.

The actuators 54 can be operated independently of each other to selectively vary the position of the respective modules 36 with respect to the central support 30. The independent actuation of the actuators 54 allows the configuration of the gripping device 22 to be changed in a multitude of ways. Each actuator 54 may vary the angle of inclination of the respective module 36 with respect to the central support 30 between a rest position shown in Figure 2 and a generic gripping position shown in Figure 4.

In a possible embodiment, the actuators 54 extend between the central support 30 and respective modules 36 through respective articulation axes A. The actuators 54 may have respective internal ends fixed to the central support 30 and respective external ends fixed to the respective modules 36. In a possible embodiment, the actuators 54 may be pneumatic actuators driven by suction or compressed air. In a possible embodiment, the actuators 54 may be connected to the same drive unit 50, which controls the suction gripping elements 42. The actuators 54 may be connected to the drive unit 50 by respective pneumatic lines 56. The actuators may be pneumatic muscle actuators.

The drive unit 50 may comprise a plurality of solenoid valves suitable for modulating the control pressure/depression of the actuators 54 to individually control the inclination angle of the modules 36 with respect to the central support 30.

The drive unit 50 may receive signals from the electronic control unit 26 that are indicative of geometric characteristics of the products P to be handled. On the basis of these signals, the drive unit 50 actuates the actuators 54 to vary the configuration of the gripping device 22 according to the geometric characteristics of the product P which must be gripped each time.

On the basis of the signals received from the electronic control unit 26, the drive unit 50 may manage the degree of suction of the suction gripping elements 42 to activate and modulate the suction in a localized way at the gripping points where more gripping strength is required, and reducing or stopping suction at the points wherein less gripping strength is needed. The drive unit 50 may also deactivate the suction gripping devices 42 which are external to the footprint of the products P to be handled, in order to prevent gripping of products located in the vicinity of the product P to be handled (double-picking).

Figure 4 illustrates the gripping device 22 in a configuration suitable for gripping a product P with a spherical or cylindrical shape. The modules 36 may be inclined in various ways with respect to the central support 30 so as to adapt the gripping device 22 to the gripping of products having a marked variability of the three-dimensional profile.

During gripping of the products P, the gripping elements 42 may move in the respective directions B with respect to the respective modules 36 and with respect to the central support 30, to adapt to the outer surface of the product P. The movement of the suction gripping elements 42 in the respective directions B may be a passive movement, controlled solely by the relative position of the product P of the suction gripping elements 42 and by the force of the elastic elements 48. The suction gripping elements 42 arrange themselves in an equilibrium position in which the forces in the respective directions B generated by the contact with the products B are equal to the forces generated by the respective elastic elements 48.

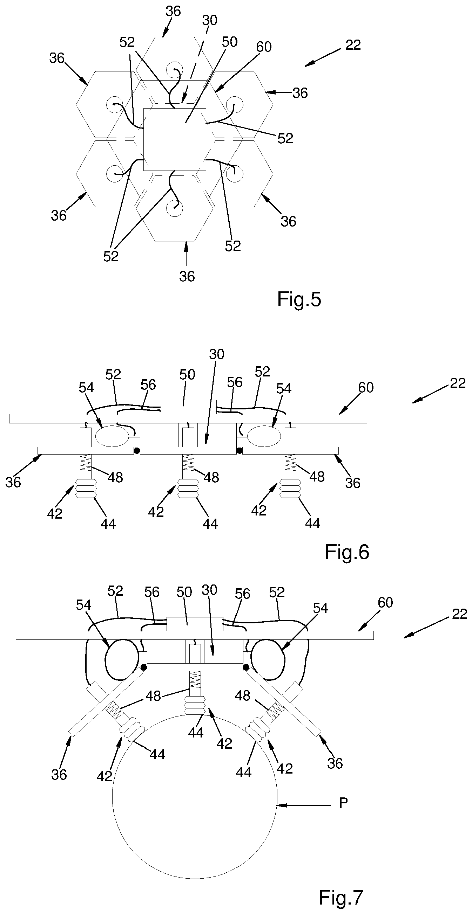

Figures 5, 6 and 7 illustrate a second embodiment of a gripping device 22 according to the present invention. The elements corresponding to those previously described are indicated with the same numerical references.

In this embodiment, the gripping device 22 comprises a base plate 60 fixed with respect to the central support 30 and spaced apart in the direction of the Z axis with respect to the central support 30. In this embodiment, the actuators 54 are arranged between the base plate 60 and the respective modules 36. The actuators 54 may be expandable pneumatic actuators. For example, the actuators 54 may be formed of flexible pneumatic bags which expand progressively according to the amount of pneumatic pressure inside them. Figures 5 and 6 illustrate, respectively, the actuators 54 in a rest configuration and in an expanded configuration. The expansion of the actuators 54 modifies the angle of inclination of the modules 36 around the respective articulation axes A with respect to the central support 30 as in the previously described embodiment. Also in this case, the control of the actuators 54 takes place independently, so as to adapt the configuration of the gripping device 22, each time, to the geometric characteristics of the product P to be handled.

During operation, the manipulator 14 moves the gripping device 22, each time, towards the product P to be picked up along the Z axis. The configuration of the gripping device 22 is actively adapted to the geometry of the product P to be gripped, each time, before the suction cups 44 of the suction gripping devices 42 come into contact with the surface of the product P on the basis of the information provided by the vision system and image processing.

Based on the information on the footprint of the product P to be picked up, the drive unit 50 may selectively activate only some of the suction gripping elements 42, and consequently approach the small-sized products P with a lower number of suction cups 44. At the same time, suction may only be activated on the active suction cups, concentrating suction on a smaller portion of the surface.

During the approach of the suction cups 44 to the surface of the product P to be picked up, the suction gripping elements 42 retract in the respective directions B and copy the shape of the product P and remain elastically pushed against the surface of the product P by the elastic elements 48. In this way, the suction cups 44 adapt to the planimetry and to the three-dimensional profile of the products P even in the case wherein the products P are contained within flexible bags. In this way the suctions cups 44 contact the product P at gripping points of different heights and come into contact with the surface of the product P in an optimal way, avoiding losses of vacuum.

The gripping device 22 according to the present invention is modular and offers a wide freedom of configuration in the design phase.

The gripping device 22 has a configuration that can be actively adapted to the surface of the piece to be gripped by individual control of the actuators 54.

The active configuration variation may also be associated with a passive adaptation of the position of the gripping points thanks to the individual displacement of the suction gripping elements 42 with respect to the respective modules 36 or with respect to the central support 30, to compensate even marked variability of the three-dimensional profile of the products to be handled.

The gripping device 22 also makes it possible to activate/deactivate various gripping areas and to partition the suction force in each gripping area according to the geometric characteristics of the products to be handled. This makes it possible to implement energy saving logics, and to eliminate the risk of double-picking.

The gripping device 22 allows the gripping footprint to be varied without having to resort to solutions of the revolver type.

Of course, without prejudice to the principle of the invention, the details of construction and the embodiments can be widely varied with respect to those described and illustrated, without thereby departing from the scope of the invention as defined by the claims that follow.

## Claims

1. A gripping device, comprising:
- a central support (30) intended to be connected to a movable element (16) of a manipulator (14),
- a plurality of modules (36) articulated to the central support (30) around respective articulation axes (A) and extending outwards with respect to the central support (30), wherein said modules (36) are arranged so as to form a crown surrounding said central support (30),
- a plurality of suction gripping elements (42) carried by said modules (36),
- a plurality of actuators (54) associated with respective modules (36) and operable independently from each other, and
- a drive unit (50) configured to control said actuators (54) to vary the inclination of the respective modules (36) with respect to the central support (30) around respective articulation axes (A) as a function of signals indicative of geometric characteristics of the products (P) to be handled, wherein said drive unit (50) is also configured to activate/deactivate and/or modulate said suction gripping elements (42) independently of each other as a function of said signals indicative of geometric characteristics of the products (P) to be handled.

2. The gripping device of claim 1, wherein said suction gripping elements (42) are movable with respect to the modules (36) along respective straight directions (B) when subjected to contact forces with the products (P) to be handled.

3. The gripping device of claim 2, wherein said suction gripping elements (42) are associated with respective elastic elements (48) that elastically push said suction gripping elements (42) towards the products (P) to be picked up and keep said suction gripping elements (42) in a rest position in the absence of contact with the products (P).

4. The gripping device of any one of the preceding claims, wherein said central support (30) has a polygonal shape with a plurality of straight sides (34), and wherein said modules (36) are articulated to respective straight sides (34) of the central support (30) .

5. The gripping device of any one of the preceding claims, wherein said actuators (54) are pneumatic muscle actuators which extend between the central support (30) and respective modules (36) through respective articulation axes (A).

6. The gripping device of any one of the preceding claims, wherein said actuators (54) have respective internal ends fixed to the central support (30) and respective external ends fixed to respective modules (36) .

7. The gripping device of any one of claims 1-4, comprising a base plate (60) fixed to and spaced apart from said central support (30), and wherein said actuators (54) are arranged between said base plate (60) and respective modules (36).

8. The gripping device of claim 7, wherein said actuators (54) comprise expandable pneumatic bags.

9. A product handling apparatus, comprising:
- a manipulator (14) having a movable element (16) movable in a working space (18),
- a vision device (24) arranged to acquire images of products (P) to be handled,
- an electronic control unit (26), which receives images of products (P) to be handled from the vision device (24), processes said images and generates signals indicative of geometric characteristics of the products (P) to be handled, and
- a gripping device (22) according to any one of the preceding claims.
